(19) Europäisches Patentamt
European Patent Office
Office européen des brevets

(11) Veröffentlichungsnummer: **0 410 298 A1**

# (12) EUROPÄISCHE PATENTANMELDUNG

(21) Anmeldenummer: **90113819.8**

(22) Anmeldetag: **19.07.90**

(51) Int. Cl.5: **C08G 73/12**, C08G 59/40, C08G 59/62

(30) Priorität: **27.07.89 DE 3924867**

(43) Veröffentlichungstag der Anmeldung: **30.01.91 Patentblatt 91/05**

(84) Benannte Vertragsstaaten: **AT CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Peter, Roland, Dr.**
**Pfalzring 92**
**D-6704 Mutterstadt(DE)**
Erfinder: **Eisenbarth, Philipp, Dr.**
**Gutleutstrasse 12**
**D-6702 Bad Duerkheim(DE)**
Erfinder: **Schlemmer, Lothar**
**Duisbergstrasse 1 a**
**D-6701 Maxdorf(DE)**

## (54) Bismaleinimid-Harze.

(57) Die Erfindung betrifft feste, schmelzbare Bismaleinimid-Harze aus einem Gemisch eines Bismaleinimids und eines Aminophenols, welches nur so weit vorreagiert ist, daß es noch zwischen 70 und 90 Mol% unumgesetztes Bismaleinimid und zwischen 30 und 60 Mol% unumgesetztes Aminophenol enthält.

EP 0 410 298 A1

## BISMALEINIMID-HARZE

Die Erfindung betrifft feste, schmelzbare Bismaleinimid-Harze aus einem Bismaleinimid und einem Aminophenol, die zu einem Präpolymeren vorreagiert haben.

Bismaleinimid-Harze aus Bismaleinimiden und Aminophenolen sind bekannt. Sie eignen sich zur Herstellung von Formteilen durch Vermischen mit Verstärkungsfasern, Verpressen und Aushärten.

Nach JP-A 56 014 530 und DE-A 27 28 843 (US 4,128,598) werden Bismaleinimid und Aminophenol unter Bildung eines Additionsproduktes (Präpolymeren) bei 100° bis 130° C miteinander vermischt. Bei 100° C findet selbst nach über 1 Stunde Reaktionszeit keine nennenswerte Bildung von Präpolymeren statt, da die Temperatur unterhalb der Schmelztemperatur der beiden Ausgangsstoffe liegt. Bei 130° C ist die Reaktion schon so weit fortgeschritten, daß die Schmelzviskosität stark angestiegen ist und kurz vor dem Gelpunkt steht, was eine gefahrlose Herstellung des Harzes im technischen Maßstab ausschließt.

In EP-A 237 763 ist ein Verfahren zur Herstellung von Prepregs beschrieben, bei dem zunächst ein Gemisch aus einem Bismaleinimid und einem Aminophenol erhitzt wird und das Reaktionsprodukt dann als Schmelze auf Verstärkungsfasern aufgebracht wird. Im Beispiel wird die Umsetzung bei 180° C vorgenommen. Dabei schreitet die Reaktion so weit vor, daß - insbesondere bei dichten Fasergebilden, wie z.B. Geweben - die Benetzung der Fasern Schwierigkeiten macht, so daß die damit hergestellten Verbundteile Fehlstellen aufweisen.

In DE-A 35 10 529 (GB 2 156 369) und DE-A 36 00 740 (US 4 680 377) sind Polyimid-Präpolymere beschrieben, die durch Umsetzung eines Bismaleinimids mit einem Diamin in einem hochsiedenden polaren Lösungsmittel, z.B. N-Methylpyrrolidon, hergestellt werden. Die Reaktion soll soweit getrieben werden, daß im Gemisch noch 30-40 % bzw. 41-55 % nicht umgesetzter Reaktanten enthalten sind. Von einer Reaktion in der Schmelze wird abgeraten, da dann ein zu hoher Anteil an Präpolymeren mit unerwünscht hohem Molekulargewicht entsteht. Die erhaltene Lösung wird direkt zur Imprägnierung von Verstärkungsfasern verwendet. Diese Arbeitsweise hat den Nachteil, daß das Präpolymere gleich weiterverarbeitet werden muß. Außerdem ist die Entfernung größerer Mengen hochsiedender Lösungsmittel, wie es für die Anwendung als Vergußmasse erforderlich wäre, stets problematisch und unwirtschaftlich.

Der Erfindung lag nun die Aufgabe zugrunde, ein lagerfähiges Bismaleinimid-Harz in fester Form bereitzustellen, das eine für die Imprägnierung von bzw. Vermischung mit Verstärkungsfasern optimale Viskosität aufweist, so daß daraus durch Verpressen und Härten Formteile mit hervorragenden mechanischen Eigenschaften hergestellt werden können. Diese Aufgabe wird erfindungsgemäß durch ein Bismaleinimid/Aminophenol-Umsetzungsprodukt gelöst, bei dem 70 bis 90 Mol%, bevorzugt 75 bis 85 Mol% der Komponente A und 30 bis 60 Mol%, bevorzugt 35 bis 55 Mol% der Komponente B in unumgesetzter Form vorliegen und der verbleibende Rest zum Präpolymeren reagiert hat.

Gegenstand der Erfindung ist demzufolge ein festes, schmelzbares Bismaleinimid-Harz, hergestellt durch Vermischen von

A. einem Bismaleinimid der Formel

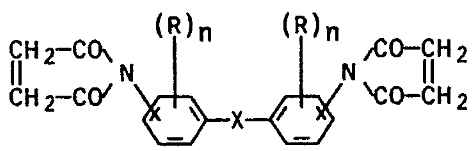

(I)

mit X = $CH_2$, O oder $SO_2$,
R = $C_1$-$C_4$-Alkyl
n = 0, 1 oder 2,
B. einen Aminophenol der Formel

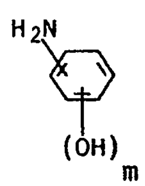

im Molverhältnis A:B = 2,4:1 bis 1,4:1, wobei A und B zu einem Präpolymeren vorreagieren,

sowie gegebenenfalls

C. 0 bis 2 Gew.-%, bezogen auf A+B, eines sekundären oder tertiären Amins oder Phosphins als Additionskatalysator,

D. 0 bis 1 Gew.-%, bezogen auf A+B, eines Polymerisationsinhibitors,

E. 0 bis 25 Gew.-% bezogen auf A+B, einer copolymerisierbaren Vinyl- oder Allylverbindung,

F. 0 bis 25 Gew.-% bezogen auf A+B, eines mindestens 2 Epoxidgruppen enthaltenden Epoxidharzes, und

G. 0 bis 2 Gew.-%, bezogen auf A+B, eines Peroxidinitiators, dadurch gekennzeichnet, daß 70 bis 90 Mol%, bevorzugt 75 bis 85 Mol% der Komponente A und 30 bis 60 Mol%, bevorzugt 35 bis 55 Mol% der Komponente B in unumgesetzter Form vorliegen und der verbleibende Rest zum Präpolymeren reagiert hat.

Zu den Einsatzstoffen ist folgendes zu sagen:

A. Bismaleinimide der Formel I sind bekannt, z.B. aus DE-A-20 40 094, DE-A-27 19 903 und DE-A-32 47 058. Bevorzugt ist 4,4′-Methylen-bis-(N-phenylmaleinsäureimid). Neben Bismaleinimiden sind grundsätzlich auch Tris- und Tetramaleinimide, sowie Mischungen verschiedener Bismaleinimide, auch mit aliphatischen geeignet.

B. Geeignete Aminophenole sind m-, o- und p-Aminophenol, wobei m-Aminophenol bevorzugt ist. Das Molverhältnis A : B liegt zwischen 2,4 : 1 und 1,4 : 1, vorzugsweise zwischen 2,0 : 1 und 1,5 : 1 und insbesondere zwischen 1,8 : 1 und 1,6 : 1. Es hat sich überraschenderweise gezeigt, daß innerhalb des letztgenannten Bereichs ein Optimum bezüglich der mechanischen Eigenschaften, wie z.B. Festigkeit und Schlagzähigkeit, sowie der Temperaturbeständigkeit auftritt.

C. Als Katalysatoren zur Beschleunigung der Additionsreaktion des Aminophenols an eine Doppelbindung des sismaleinimids können bis zu 2,0, vorzugsweise 0,2 bis 1,5 Gew.-%, bezogen auf die Summe A + B, eines sekundären oder eines tertiären Amins bzw. Phosphins eingesetzt werden. Bevorzugte Amine sind solche der allgemeinen Formeln $N(R_5)_3$ und $(R_6)_2N-R_7-N(R_6)_2$, wobei $R_5$, $R_6$ und $R_7$ ggf. substituierte aliphatische oder aromatische Kohlenwasserstoffreste bzw. eine Kohlenwasserstoffbrücke sein können. Bevorzugte Amine sind N,N,N′,N′-Tetramethyldiaminodiphenylmethan, N,N-Dimethylanilin und Dimethylbenzylamin oder auch Imidazole, wie z.B. 1-Methylimidazol. Bei den Phosphinen ist Triphenylphosphin bevorzugt.

D. Als Inhibitoren zur Verhinderung der vorzeitigen radikalischen Polymerisation der Doppelbindung des Bismaleinimids werden übliche, vorzugsweise phenolische Verbindungen, insbesondere Hydrochinon, oder 2,6-Dimethylhydrochinon in Mengen von bis zu 1, vorzugsweise 0,1 bis 0,5 Gew.-% bezogen auf die Summe A + B, eingesetzt.

Durch geeignete Wahl der Art und Menge der Additionskatalysatoren C und Inhibitoren D kann man die Reaktivität des Gemisches A + B kontrolliert einstellen, so daß die Umsetzung von Bismaleinimid mit Aminophenol bei höheren Temperaturen genügend rasch erfolgt, ohne daß unerwünschte Vernetzung eintritt und diese auch beim Schmelzeauftrag auf die Verstärkungsfasern und bei der Verarbeitung des Prepregs unterbleibt.

E. Die Vinyl- oder Allylverbindungen, die in Mengen von bis zu 25, vorzugsweise von 5 bis 20 Gew.-% bezogen auf die Summe A + B, zugemischt werden, werden bei der Aushärtung des Prepregs als Comonomere in die Harzmatrix einpolymerisiert. Sie wirken als Verdünner zur Erniedrigung der Harzviskosität, vor allem aber kann man durch geeignete Wahl der Art und Menge dieser Zusatzstoffe auch in Form von Gemischen mehrerer Vinyl- oder Allylverbindungen, die Klebrigkeit des Prepregs gezielt einstellen und die Erweichungstemperatur des Tränkharzes auf Raumtemperatur absenken. Bevorzugt sind Monomere, die zwei oder drei Vinyl- oder Allylgruppen aufweisen. Geeignet sind z.B. N-Vinylpyrrolidon, N-Vinylcarbazol, Divinylbenzol, Acrylate, Diallylether, ethoxyliertes Bisphenol-A-methacrylat, 3,3′-Diallyl-Bisphenol A, 3,3′-Dipropenyl-Bisphenol A, ferner Umsetzungsprodukte eines Diepoxids mit Acrylsäure oder Methacrylsäure, insbesondere aber Diallylphthalat oder daraus erzeugte Präpolymere, Triallylcyanurat und Triallylisocyanurat.

F. Übliche Epoxidharze in Mengen von bis zu 25, vorzugsweise von 5 bis 20 Gew.-%, bezogen auf A + B, können ebenfalls als reaktive Verdünner wirken, die in die Harzmatrix eingebaut werden.

G. Als Polymerisationsinitiatoren zur Beschleunigung des Härtungsvorgangs können 0 bis 2, vorzugsweise 0,01 bis 2 Gew.-% bezogen auf die Summe A + B, üblicher Peroxide, die bei Temperaturen oberhalb von 140 °C in Radikale zerfallen, zugesetzt werden.

Das Gemisch wird auf Temperaturen zwischen 140 und 190 °C, vorzugsweise auf 150 bis 180 °C aufgeheizt, wobei die Komponenten aufschmelzen und Bismaleinimid und Aminophenol miteinander reagieren. Die Verweilzeit der Reaktionspartner bei diesen Temperaturen soll verhältnismäßig kurz, vorzugsweise 1 bis 10, insbesondere 2 bis 4 min betragen. Man kann von einer Vormischung pulver- oder granulatförmiger Ausgangsmaterialien ausgehen und diese z.B. in einem Rührgefäß auf Reaktionstemperatur bringen. Bevorzugt wird das Vermischen aber in einem Extruder vorgenommen, wobei zweckmäßigerweise zuerst das Bismaleinimid zugegeben und aufgeschmolzen wird und dann durch eine - in Austragsrichtung darauffolgende - Einzugsöffnung das Aminophenol zugesetzt wird. Die Umsetzung wird soweit getrieben, bis in dem entstehenden Bismaleinimid-Harz noch 70 bis 90 Mol% der Komponente A und 30 bis 60 Mol% der Komponente B in unumgesetzter Form vorliegen. Der Grad der Umsetzung kann auf einfache Weise durch Reaktionstemperatur, Reaktionszeit und ggf. durch Art und Menge des Additionskatalysators gesteuert werden. Der Fortgang der Reaktion kann durch rasches Abkühlen und analytische Bestimmung der nicht umgesetzten Ausgangskomponenten A + B kontrolliert werden. Dabei wird die Hochdruckflüssigkeitschromotographie (HPLC) zur quantitativen Bestimmmung von A + B im Harzgemisch angewandt, wobei die Retentionszeiten und Flächen mit den Reinsubstanzen A und B zuvor geeicht wurden. Auf diese Weise lassen sich die für das jeweilige System optimalen Reaktionsbedingungen einfach ermitteln. Nach Beendigung der Reaktion wird die Schmelze rasch abgekühlt. Das Harz kann granuliert, verschuppt oder pulverisiert werden. In dieser Form ist es praktisch unbegrenzt lagerfähig.

Zur Weiterverarbeitung kann es wieder aufgeschmolzen und mit weiteren Zusatzstoffen, z.B. Fasern oder Füllstoffen vermischt werden. Es ist grundsätzlich auch möglich, das Harz in einem niedrigsiedenden Lösungsmittel, z.B. in einem Ether oder Ester zu lösen und als Lösung auf Verstärkungsfasern aufbringen. Derartige niedrigsiedende Lösungsmittel, z.B. Methylglykolacetat oder Methoxypropylacetat, haben gegenüber den hochsiedenden Lösungsmitteln, wie N-Methylpyrrolidon, den Vorteil, daß sie unter wesentlich schonenderen Bedingungen aus dem Prepreg wieder entfernt werden können.

Vermischt man die Harzmischung mit Kurzfasern, so erhält man BMC (bulk molding compound)-Massen, die z.B. durch Spritzgießen verarbeitet und dann gehärtet werden können.

Beim Aufbringen auf Fasermatten entstehen verform- und härtbare Halbzeuge, die den SMC (sheet molding compound)-Massen entsprechen.

Man kann die Harzmischung auch auf unidirektionale Fasergelege oder auf Endlosfaserstränge aufbringen. Derartige Prepregs können dann zu Hochleistungsverbundwerkstoffen verformt und ausgehärtet werden.

Schließlich können die erfindungsgemäßen Harze auch ohne Faserzusatz zu Überzügen, Lacken, Verguß- und Einbettmassen verarbeitet werden.

Die Härtung geschieht durch Erhitzen auf Temperaturen zwischen 160 und 300 °C, vorzugsweise auf 180 bis 250 °C . Die dabei erhaltenen Werkstoffe weisen excellente mechanische und thermische Eigenschaften auf und können insbesondere in der Automobilindustrie, in der Elektronik und in der Luft- und Raumfahrt eingesetzt werden.

Beispiel 1

In einem 1-l-Vierhalskolben mit Rührer, Innenthermometer und Stickstoffeinlaß werden bei 170 °C 425 g (1,19 Mol) N,N′-4,4′-Bismaleinimidodiphenylmethan (BMI) aufgeschmolzen und bei 160 °C mit 75 g (0,69 Mol) 3-Aminophenol (AP) versetzt. Die Mischung wird 4 Minuten lang bis zur völligen Homogenität gerührt und anschließend ausgegossen und im Eisbad abgekühlt. Von dem klaren Harz werden die nicht umgesetzten Mengen an Ausgangsstoffen mit HPLC, die Glastemperaturen mit DSC sowie die Schmelzviskositäten und Gelierzeiten bestimmt. Die Ergebnisse sind in der Tabelle zusammengefaßt.

Beispiel 2

In einem Zweischneckenextruder wird eine Mischung aus 85 Teilen N,N′ -4,4′-Bismaleinimidodiphenylmethan und 15 Teilen 3-Aminophenol bei einer Temperatur von 180 °C aufgeschmolzen und anreagiert. Das Produkt wird wie in Beispiel 1 beschrieben analysiert (Tabelle).

Beispiel 3 (Vergleich)

Man rührt bei 130 °C 85 g (0,24 Mol) N,N′-4,4′-Bismaleinimidodiphenylmethan und 15 g (0,14 Mol) 3-Aminophenol. Nach einer halben Stunde bei dieser Temperatur ist aus dem anfänglichen Pulvergemisch eine homogene Schmelze entstanden, die ausgegossen, abgekühlt und anschließend analysiert wird (Tabelle).

Tabelle

| Beispiel | Reaktionsdauer (min) | Reaktionstemperatur (° C) | Zusammensetzung unumgesetztes | | Glastemperatur DSC (° C) | Schmelzviskos. 150° C (mPas) | Gelierzeit bei 150° C (min) |
|---|---|---|---|---|---|---|---|
| | | | BMI (Mol%) | AP (Mol%) | | | |
| 1 | 4 | 160 | 84,5 | 53,3 | 38 | 40 | 12′20″ |
| 2 | 2 | 180 | 88,0 | 47,3 | - | 300 | 12′05″ |
| 3 | 30 | 130 | 69,3 | 21,3 | 68 | 3800 | <5′ |

## Ansprüche

1. Festes, schmelzbares Bismaleinimid-Harz, hergestellt durch Vermischen von
A. einem Bismaleinimid der Formel

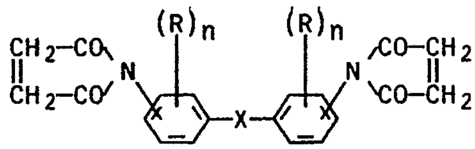

(I)

mit X = $CH_2$, O oder $SO_2$,
R = $C_1$-$C_4$-Alkyl
n = 0, 1 oder 2
B. einen Aminophenol der Formel

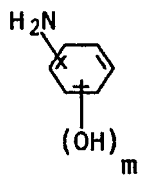

mit m = 1 oder 2
im Molverhältnis A : B = 2,4 : 1 bis 1,4 : 1, wobei A und B zu einem Präpolymeren vorreagieren, sowie gegebenenfalls
C. 0 bis 2 Gew.-%, bezogen auf A + B, eines sekundären oder tertiären Amins oder Phosphins als Additionskatalysator,
D. 0 bis 1 Gew.-%, bezogen auf A + B, eines Polymerisationsinhibitors,
E. 0 bis 25 Gew.-%, bezogen auf A + B, einer copolymerisierbaren Vinyl- oder Allylverbindung,
F. 0 bis 25 Gew.-%, bezogen auf A + B, eines mindestens 2 Epoxidgruppen enthaltendes Epoxidharzes, und
G. 0 bis 2 Gew.-% bezogen auf A + B, eines Peroxidinitiators,
dadurch gekennzeichnet, daß 70 bis 90 Mol% der Komponente A und 30 bis 60 Mol% der Komponente B in unumgesetzter Form vorliegen und der verbleibende Rest zum Präpolymeren reagiert hat.

2. Verwendung des Bismaleinimid-Harzes nach Anspruch 1 zur Herstellung von SMC-Formteilen durch Aufbringen auf flächige Fasergebilde und Aushärten.

3. Verwendung der Bismaleinimid-Harze nach Anspruch 1 zur Herstellung von BMC-Formteilen durch Vermischen mit Verstärkungsfasern und ggf. Füllstoffen und Aushärten.

4. Verwendung der Bismaleinimid-Harze nach Anspruch 1 zur Herstellung von Vergußmassen.

Europäisches
Patentamt

# EUROPÄISCHER RECHERCHENBERICHT

Nummer der Anmeldung

**EP 90 11 3819**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-4 128 598 (K. MAKINO et al.)<br>– – – | | C 08 G 73/12<br>C 08 G 59/40<br>C 08 G 59/62<br>C 08 F 222/40 |
| D,A | EP-A-0 237 763 (BASF)<br>– – – – – | | |
| | | | **RECHERCHIERTE SACHGEBIETE (Int. Cl.5)** |
| | | | C 08 G<br>C 08 F |

Der vorliegende Recherchenbericht wurde für alle Patentansprüche erstellt

| Recherchenort | Abschlußdatum der Recherche | Prüfer |
|---|---|---|
| Den Haag | 16 November 90 | LEROY ALAIN |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument